# EUROPÄISCHE PATENTANMELDUNG

(11) **EP 3 435 530 A1**
(43) Veröffentlichungstag der Anmeldung: **30.01.2019**
(21) Anmeldenummer: 18184746.8
(22) Anmeldetag: 20.07.2018
(51) Int. Cl.: H02M 1/32, H02M 1/36, H02M 7/48

(54) **PHOTOVOLTAIK-WECHSELRICHTERANORDNUNG UND VERFAHREN ZUM BETREIBEN EINER SOLCHEN**

(30) Priorität: 25.07.2017 DE 102017007024
(71) Anmelder: Kostal Industrie Elektrik GmbH, 58513 Lüdenscheid (DE)
(72) Erfinder: PETERS, Stephan, 44137 Dortmund (DE); SILKENBEUMER, Tobias, 58099 Hagen (DE)
(74) Vertreter: Kerkmann, Detlef

(57) **Zusammenfassung**

Eine Photovoltaik-Wechselrichteranordnung mit zumindest einem Gleichspannungseingang, der an einen Gleichspannungszwischenkreis angeschlossen ist, wobei zwischen dem Gleichspannungseingang und dem Gleichspannungszwischenkreis in zumindest einer der beiden Leitungen ein elektromechanischer Trennschalter angeordnet ist, wobei der Gleichspannungszwischenkreis mit dem Eingang einer Wechselrichterbrücke verbunden ist, die ausgangsseitig mit einem Wechselspannungsnetz verbindbar ist, ist erfindungsgemäß dadurch gekennzeichnet, dass zwischen dem Gleichspannungseingang und dem elektromechanischen Trennschalter ein steuerbares Leistungs-Halbleiterbauelement angeordnet ist, mittels dessen zwischen den beiden Leitungen des Gleichspannungseingangs eine elektrisch leitende Verbindung hergestellt werden kann. Gemäß eines ebenfalls erfindungsgemäßen Verfahrens zum Betreiben einer solchen Photovoltaik-Wechselrichteranordnung wird zwischen den beiden Leitungen des Gleichspannungseingangs vor dem Aufschalten der Wechselrichterbrücke auf das Wechselspannungsnetz mittels des steuerbaren Leistungs-Halbleiterbauelements eine elektrisch leitende Verbindung hergestellt.

## Beschreibung

Die Erfindung betrifft eine Photovoltaik-Wechselrichteranordnung mit zumindest einem Gleichspannungseingang, der an einen Gleichspannungszwischenkreis angeschlossen ist, wobei zwischen dem Gleichspannungseingang und dem Gleichspannungszwischenkreis in zumindest einer der beiden Leitungen ein elektromechanischer Trennschalter angeordnet ist, wobei der Gleichspannungszwischenkreis mit dem Eingang einer Wechselrichterbrücke verbunden ist, die ausgangsseitig mit einem Wechselspannungsnetz verbindbar ist. Weiterhin betrifft die Erfindung ein Verfahren zum Betreiben einer solchen Photovoltaik-Wechselrichteranordnung.

Bei einstufigen Photovoltaik-Wechselrichtern zur Einspeisung in ein Wechselstromnetz ist die minimale Höhe der Eingangs-Gleichspannung durch den vorgegebenen Scheitelwert der Ausgangs-Wechselspannung bestimmt. Die maximale Höhe der Eingangs-Gleichspannung hingegen ist allein durch die Spannungsfestigkeit der elektrischen Komponenten des Wechselrichters begrenzt. Eine höhere Spannungsfestigkeit bedeutet aber zugleich einen höheren Kostenfaktor der Komponenten. Zudem müssen Isolationsabstände, insbesondere Luft- und Kriechstrecken für die maximale Spannung des Schaltungsteils ausgelegt werden.

Durch diese obere und untere Spannungsbegrenzung ergibt sich bereits ein relativ eingeschränkter Eingangsspannungsbereich, in dem der Photovoltaik-Wechselrichter arbeiten kann. Durch den zusätzlichen Effekt, dass die Ausgangsspannung eines Photovoltaik-Moduls temperaturabhängig ist, wobei die Spannung bei höheren Temperaturen sinkt und bei niedrigen Temperaturen steigt, wird der tatsächlich verfügbare Eingangsspannungsbereich noch weiter eingeschränkt. Die Anzahl der an einem Gleichspannungseingang angeschlossenen Photovoltaik-Module, bzw. die Eingangsspannung, welche sich durch Modulspannung und Anzahl der Module ergibt, muss daher so angepasst werden, dass über den gesamten möglichen Bereich der Umgebungstemperatur niemals mehr als die maximal erlaubte Spannung am Wechselrichter anliegt.

Die Photovoltaik-Wechselrichteranordnung gemäß der vorliegenden Erfindung hat gegenüber dem Stand der Technik den Vorteil, einen deutlich größeren Bereich an Eingangsspannungen abzudecken, ohne dazu kostspieligere Bauelemente zu erfordern.

Dies gelingt erfindungsgemäß dadurch, dass zwischen dem Gleichspannungseingang und dem elektromechanischen Trennschalter ein steuerbares Leistungs-Halbleiterbauelement angeordnet ist, mittels dessen zwischen den beiden Leitungen des Gleichspannungseingangs eine elektrisch leitende Verbindung hergestellt werden kann.

Das erfindungsgemäße Verfahren zum Betreiben einer solchen Photovoltaik-Wechselrichteranordnung ist insbesondere dadurch gekennzeichnet, dass zwischen den beiden Leitungen des Gleichspannungseingangs vor dem Aufschalten der Wechselrichterbrücke auf das Wechselspannungsnetz mittels des steuerbaren Leistungs-Halbleiterbauelements eine elektrisch leitende Verbindung hergestellt wird.

Die Erfindung macht sich dabei die Erkenntnis zu Nutze, dass zu hohe Spannungen insbesondere vor dem Einschalten des Wechselrichters und der damit einhergehenden Belastung des angeschlossenen Photovoltaik-Moduls relevant sind. Sobald das Photovoltaik-Modul nämlich belastet wird, wird die Spannung gleich durch mehrere Effekte abgesenkt. So erwärmen sich einerseits die Module durch den Stromfluss, so dass die Spannung wegen der bereits zuvor angesprochenen Temperaturabhängigkeit sinkt, andererseits bewegt sich aber auch der Arbeitspunkt durch die Belastung in einen Kennlinienbereich niedrigerer Spannung.

Die elektrisch leitende Verbindung zwischen den beiden Leitungen des Gleichspannungseingangs kann über den Leistungspfad des Leistungs-Halbleiterbauelements alleine oder zusätzlich über einen mit diesem in Reihe geschalteten, elektrischen Widerstand hergestellt werden.

In einer vorteilhaften Ausgestaltung des erfindungsgemäßen Verfahrens wird das steuerbare Leistungs-Halbleiterbauelement zur gezielteren Einstellung der Belastung im periodischen Wechsel ein- und ausgeschaltet.

Im Folgenden werden die erfindungsgemäße Photovoltaik-Wechselrichteranordnung sowie das ebenfalls erfindungsgemäße Verfahren zum Betreiben einer solchen anhand eines Ausführungsbeispiels gemäß der Zeichnung näher erläutert. Die Figuren zeigen dabei:
- Fig. 1:: Ein schematisches Schaltungsdiagramm einer erfindungsgemäßen Photovoltaik-Wechselrichteranordnung
- Fig. 2:: Eine typische Strom- bzw. Leistungs-Spannungskennlinie einer Photovoltaik-Wechselrichteranordnung

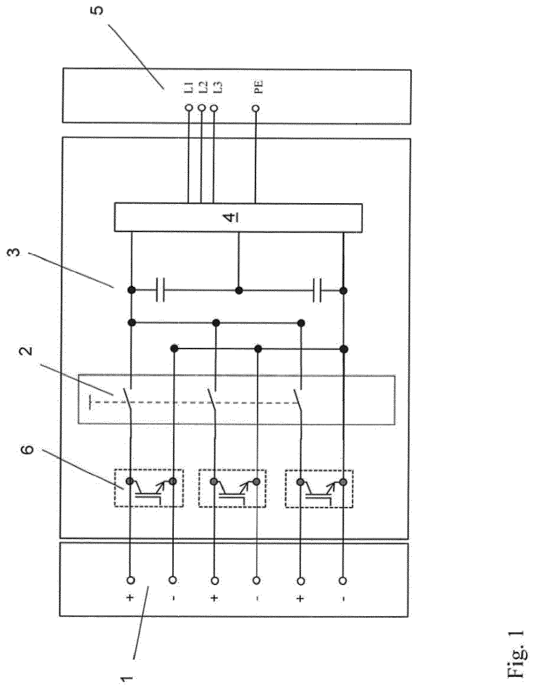

Die in der Zeichnung in Fig. 1 beispielhaft gezeigte Photovoltaik-Wechselrichteranordnung ist mit drei Gleichspannungseingängen 1 zum Anschluss jeweils eines ein oder mehrere zusammengeschaltete Photovoltaik-Module umfassenden, sogenannten Strings versehen. Die jeweils beiden mit den positiven (+) und negativen (-) Eingangsklemmen versehenen Leitungen dieser Gleichspannungseingänge 1 sind an einen gemeinsamen Gleichspannungszwischenkreis 3 angeschlossen, wobei jeweils die mit der positiven (+) Eingangsklemme verbundene Leitung mit einem elektromechanischen Trennschalter 2 versehen ist. Der gemeinsame Gleichspannungszwischenkreis 3 selbst ist mit dem Eingang einer Wechselrichterbrücke 4 verbunden, die wiederum mit einem Wechselspannungsnetz 5, insbesondere mit einem öffentlichen Stromversorgungsnetz verbindbar ist.

Im Unterschied zu bisher bekannten Photovoltaik-Wechselrichteranordnungen ist hier zwischen jeweils einem Gleichspannungseingang 1 und dem diesem zugeordneten Trennschalter 2 ein steuerbares Leistungs-Halbleiterbauelement 6 angeordnet, und zwar so, dass mittels dieses Leistungs-Halbleiterbauelements 6 die beiden Leitungen des jeweiligen Gleichspannungseingangs 1 elektrisch leitend miteinander verbunden werden können. Das Leistungs-Halbleiterbauelement 6 kann beispielsweise als IGBT oder als MOSFET ausgebildet sein.

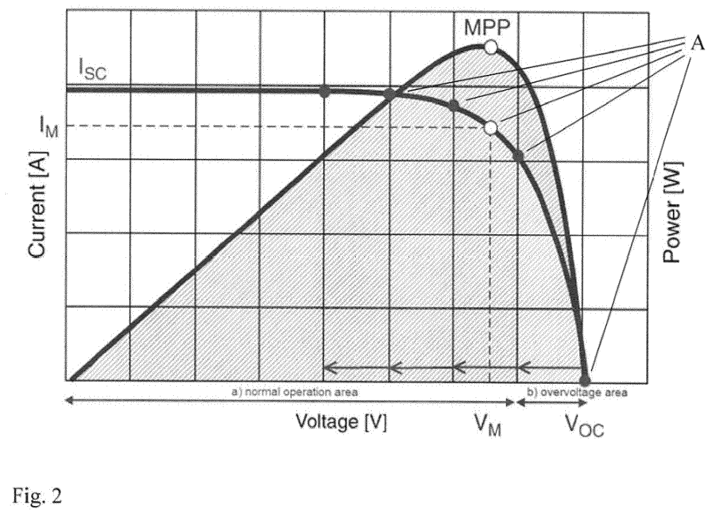

Zur Beschreibung der Funktion der erfindungsgemäßen Photovoltaik-Wechselrichteranordnung beim Aufschalten der Wechselrichterbrücke 4 auf das Wechselstromnetz 5 wird auch auf die in Fig. 2 gezeigte typische Strom- bzw. Leistungs-Spannungskennlinie einer solchen Anordnung Bezug genommen. Vor dem Aufschalten der Wechselrichterbrücke 4 auf das Wechselstromnetz 5 sind die elektromechanischen Trennschalter 2 zwischen den Gleichspannungseingängen 1 und dem gemeinsamen Gleichspannungszwischenkreis 3 noch geöffnet. Liefert dann ein an einem der Gleichspannungseingänge 1 angeschlossener, ein oder mehrere Photovoltaik-Module umfassender String eine Ausgangsspannung, so liegt an diesem Gleichspannungseingang 1 eine der zu diesem Zeitpunkt vorliegenden solaren Einstrahlungsleistung auf den angeschlossenen String entsprechende Leerlaufspannung an. In Fig. 2 ist diese mit Voc bezeichnet.

Um die anliegende Spannung vor dem Aufschalten der Wechselrichterbrücke 4 zu verringern, wird nun eine gezielte Belastung des angeschlossenen Strings vorgenommen. Die Belastung erfolgt dabei vorzugsweise am frühen Morgen, wenn die solare Einstrahlungsleistung, und somit die Leistung der notwendigen Belastung noch auf wenige Watt beschränkt ist.

Die Belastung des angeschlossenen Strings erfolgt, indem die beiden Leitungen des Gleichspannungseingangs 1 mittels des steuerbaren Leistungs-Halbleiterbauelements 6 direkt oder indirekt miteinander verbunden werden. Die Belastung soll dabei so erfolgen, dass der Arbeitspunkt A (siehe Fig. 2) dadurch in einen Bereich niedriger Spannung wandert, bevor der Wechselrichter ans Netz geht und den String somit dauerhaft belastet.

Die erforderliche Verlustleistung, um den Arbeitspunkt A zu verschieben, wird entweder in dem Leistungs-Halbleiterbauelement 6 selbst oder zusätzlich in einem mit diesem in Reihe zwischen den beiden Eingangsklemmen geschalteten, hier nicht dargestellten Widerstandselement durch Umwandlung in Wärme abgeführt. Der Arbeitspunkt wandert durch die Belastung, wie in Fig. 2 mittels der Pfeile angedeutet, in Richtung niedrigerer Spannungen und höherer Ströme. Um die Belastung gezielter steuern zu können, kann das steuerbare Leistungs-Halbleiterbauelement 6 auch getaktet betrieben, d.h. im periodischen Wechsel ein- oder ausgeschaltet werden. Bei einem quasi-Kurzschluss, bei dem zwischen den beiden Leitungen des Gleichspannungseingangs 1 nur der sehr geringe Durchgangswiderstand des Leistungspfades des Leistungs-Halbleiterbauelements 6 liegt, wird der angeschlossene String in den in Fig. 2 mit I_{SC} bezeichneten Kurzschlussstrom gefahren und hat demnach nur noch seine minimale Spannung.

Durch die Belastung direkt am Gleichspannungseingang 1 muss nur noch ein kleiner Schaltungsteil, nämlich der zwischen dem Gleichspannungseingang 1 und den elektromechanischen Trennschaltern 2 auf eine hohe Spannungsfestigkeit ausgelegt werden.

In dem durch die Belastung mittels des Leistungs-Halbleiterbauelements 6 erreichten Zustand eines Arbeitspunktes A mit einer deutlich niedrigeren Spannung als der Leerlaufspannung Voc werden dann die elektromechanischen Trennschalter 2 geschlossen, und somit die Gleichspannungseingänge 1 mit dem gemeinsamen Gleichspannungszwischenkreis 3 elektrisch verbunden. Die in der Zeichnung dargestellte mechanische Kopplung der drei elektromechanischen Trennschalter 2 ist dabei nicht zwingend erforderlich. Praktisch gleichzeitig mit dem Schließen der elektromechanischen Trennschalter 2 wird die Wechselrichterbrücke auf das Wechselstromnetz 5 aufgeschaltet und die angeschlossenen Strings dadurch belastet. Ebenfalls gleichzeitig werden die mittels der steuerbaren Leistungs-Halbleiterbauelemente 6 hergestellten elektrisch leitenden Verbindungen wieder getrennt.

Im stationären Fall wird der Wechselrichter dann möglichst im Punkt maximaler Leistungsabgabe betrieben. Da sich die Lage dieses in Fig. 2 mit MPP bezeichneten Punktes auf der Strom-Spannungskennlinie bzw. der Leistungs-Spannungskennlinie mit wechselnder solarer Einstrahlung ändert, wird der Arbeitspunkt A mittels eines sogenannten MPP-Trackers diesem MPP nachgeführt.

## Patentansprüche

1. Photovoltaik-Wechselrichteranordnung mit zumindest einem Gleichspannungseingang (1), der an einen Gleichspannungszwischenkreis (3) angeschlossen ist, wobei zwischen dem Gleichspannungseingang (1) und dem Gleichspannungszwischenkreis (3) in zumindest einer der beiden Leitungen ein elektromechanischer Trennschalter (2) angeordnet ist, wobei der Gleichspannungszwischenkreis (3) mit dem Eingang einer Wechselrichterbrücke (4) verbunden ist, die ausgangsseitig mit einem Wechselspannungsnetz (5) verbindbar ist, **dadurch gekennzeichnet, dass** zwischen dem Gleichspannungseingang (1) und dem elektromechanischen Trennschalter (2) ein steuerbares Leistungs-Halbleiterbauelement (6) angeordnet ist, mittels dessen zwischen den beiden Leitungen des Gleichspannungseingangs (1) eine elektrisch leitende Verbindung hergestellt werden kann.

2. Photovoltaik-Wechselrichteranordnung nach Anspruch 1, **dadurch gekennzeichnet, dass** zwischen den beiden Leitungen des Gleichspannungseingangs (1) eine elektrisch leitende Verbindung allein über den Leistungspfad des Leistungs-Halbleiterbauelement (6) hergestellt werden kann.

3. Photovoltaik-Wechselrichteranordnung nach Anspruch 1, **dadurch gekennzeichnet, dass** zwischen den beiden Leitungen des Gleichspannungseingangs (1) eine elektrisch leitende Verbindung über den Leistungspfad des Leistungs-Halbleiterbauelements (6) und einen mit diesem in Reihe geschalteten elektrischen Widerstand hergestellt werden kann.

4. Verfahren zum Betreiben einer Photovoltaik-Wechselrichteranordnung nach einem der vorhergehenden Ansprüche, **dadurch gekennzeichnet, dass** zwischen den beiden Leitungen des Gleichspannungseingangs (1) vor dem Aufschalten der Wechselrichterbrücke (4) auf das Wechselspannungsnetz (5) mittels des steuerbaren Leistungs-Halbleiterbauelements (6) eine elektrisch leitende Verbindung hergestellt wird.

5. Verfahren zum Betreiben einer Photovoltaik-Wechselrichteranordnung nach Anspruch 4, **dadurch gekennzeichnet, dass** das steuerbare Leistungs-Halbleiterbauelement (6) im periodischen Wechsel ein- und ausgeschaltet wird.
